# EUROPEAN PATENT SPECIFICATION

(11) **EP 4 497 313 B1**
(45) Date of publication and mention of the grant of the patent: **10.09.2025**
(21) Application number: 24180652.0
(22) Date of filing: 07.06.2024
(51) Int. Cl.: A01D 34/00, A01D 34/68

(54) **PUSH WORKING MACHINE**
SCHUBARBEITSMASCHINE
MACHINE DE TRAVAIL À POUSSÉE

(30) Priority: 25.07.2023 CN 202310924711
(43) Date of publication of application: 29.01.2025
(73) Proprietor: Nanjing Chervon Industry Co., Ltd., Nanjing, Jiangsu 211106 (CN)
(72) Inventor: FENG, Jifeng, Nanjing, Jiangsu 211106 (CN); XIAN, Chao, Nanjing, Jiangsu 211106 (CN); SU, Wei, Nanjing, Jiangsu 211106 (CN)
(74) Representative: Sun, Yiming

(56) References cited:
- US-A1- 2018 263 182
- US-B2- 11 464 163

## Description

### TECHNICAL FIELD

The present disclosure relates to garden tools, for example, a push working machine and mower.

### BACKGROUND

In a self-propelled garden tool such as a push mower or a push snow thrower, an operating member is generally disposed on the handle and used for a user to control the operation states of a traveling motor and a working motor of the machine.

The user can start the mower through the operating member such that the mower travels and/or mows. During the process of starting the mower, the user can control the process of starting the mower and can control at least the starting speed or the change in speed.

This part provides background information related to the present application, which is not necessarily the existing art.

Document US 11 464 163 B2 discloses a push working machine according to the preamble of claim 1.

### SUMMARY

The present application aims to solve or at least alleviate part or all of the preceding problems. For this reason, an object of the present application is to provide a mower with variable starting acceleration.

To achieve the preceding object, the present application adopts the technical solutions below.

A push working machine includes a body including at least a traveling assembly, a traveling motor driving the traveling assembly, a functional assembly, and a functional motor driving the functional assembly; a handle device connected to the body and including at least an operating member for a user to operate; a controller configured to control at least the working states of the traveling motor and the functional motor; and a power interface for connecting electrical energy capable of supplying power to at least the traveling motor and the functional motor. The controller is configured to, in response to a start signal, be capable of controlling the traveling motor to accelerate to the first speed with the first acceleration and accelerate to the target self-propelled speed with the second acceleration.

In an example, the second acceleration is less than the first acceleration.

In an example, the push working machine further includes an Internet of Things (IoT) module configured to be connected to at least the controller and capable of transmitting communication data to the controller.

In an example, an IoT module is configured to communicate with an external terminal and acquire startup setting data sent by the external terminal.

In an example, the controller is configured to acquire the startup setting data and adjust at least the first acceleration and/or the second acceleration according to the startup setting data.

In an example, the IoT module supports at least one of wired communication technology and wireless communication technology.

In an example, the IoT module supports at least one of transmission access, network switching, mobile communications, wireless communications, optical communications, satellite communications, support management, and private network communications.

**In** an example, the IoT module supports at least one of cellular network technology, wireless local area network (LAN) technology, wireless personal area network (PAN) technology, satellite communication technology, infrared communication technology, optical fiber communication technology, Bluetooth Low Energy (Bluetooth LE) technology, long range (LoRa) technology, Wi-Fi, and Zigbee.

**In** an example, the controller is configured to acquire the startup setting data and adjust the first acceleration and/or the second acceleration according to the startup setting data.

**In** an example, the controller includes a data storage unit configured to store historical startup setting data.

In an example, the controller further includes a control unit configured to set the first acceleration and/or the second acceleration according to the historical startup setting data.

### BRIEF DESCRIPTION OF DRAWINGS

To illustrate technical solutions in examples of the present application more clearly, drawings used in the description of the examples are briefly described below. Apparently, the drawings described below illustrate only part of the examples of the present application, and those of ordinary skill in the art may obtain other drawings based on the drawings described below on the premise that no creative work is done.
FIG. 1 is a structural view of a mower according to an example of the present application.
FIG. 2 is a schematic diagram of a control circuit of the mower in FIG. 1.
FIG. 3 is a schematic diagram illustrating a variation curve of speed during a process of starting a self-propelled motor in an example of the present application.
FIG. 4 is a schematic diagram illustrating a variation curve of speed during a process of starting a cutting motor in an example of the present application.
FIG. 5 is a schematic view of a mower system in an example of the present application.
FIG. 6 is a schematic view of an intelligent terminal display interface in an example of the present application.
FIG. 7 is a schematic diagram illustrating the position of a lamp control circuit on a control board in an example of the present application.
FIG. 8 is a schematic diagram illustrating the position of a lamp control circuit on a control board in an example of the present application.

### DETAILED DESCRIPTION

In addition to a mower, a push working machine in the present application may also include a push snow thrower, a push warehouse trailer, a picnic trolley, a power trailer, or another self-propelled electrical device. A push mower that can be operated by a user from the rear side of the push device is used as an example for the description below. A functional assembly in the push working machine may be a cutting assembly. For example, the cutting assembly includes a cutting blade or a cutting deck. A functional motor may be understood as a cutting motor.

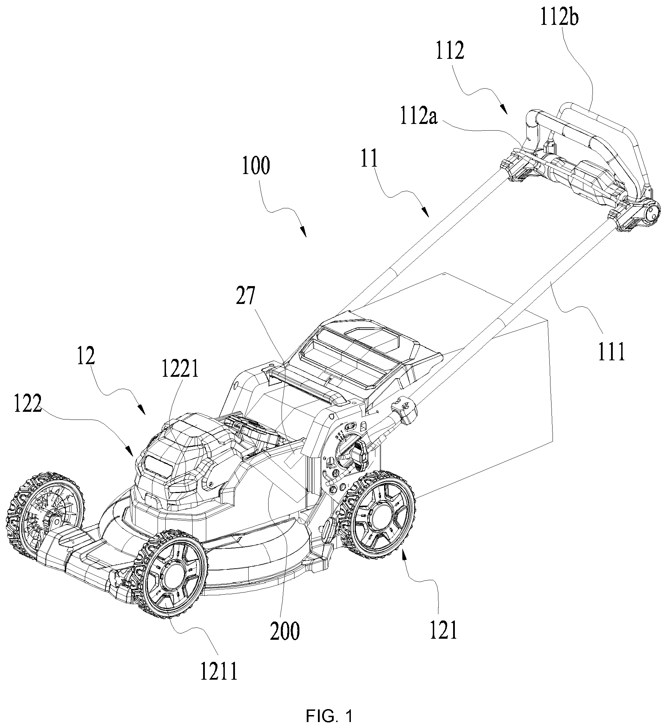

Referring to FIG. 1, a mower 100 mainly includes a handle device 11, a connecting rod 111, an operating member 112, an self-propelled operation trigger 112a, a body 12, and a traveling assembly 121. The body 12 includes the traveling assembly 121 and a power mechanism (not shown in the figure). Optionally, the handle device 11 includes the connecting rod 111 and the operating member 112 that can be held. The operating member 112 includes at least a grip for the user to hold and the self-propelled operation trigger 112a, the connecting rod 111 is a hollow long rod structure, and the connecting rod 111 connects the operating member 112 to the body 12. The traveling assembly 121 is mounted onto the body 12 and can rotate around a rotary shaft so that the entire mower 100 can move on the ground. In this example, the traveling assembly 121 includes traveling wheels 1211 of the mower 100 and a power mechanism for driving the traveling wheels 1211 to travel.

In this example, the mower 100 has a self-propelled control function. The power mechanism can drive the traveling assembly 121 to rotate to drive the mower 100 to move on the ground so that the user does not need to manually push the mower 100 to move and mow. Specifically, the power mechanism may be a traveling motor that can output a driving force for driving the traveling assembly 121 to rotate. In some examples, the handle device 11 of the mower 100 is further integrated with a mowing operation trigger 112b. For example, the mowing operation trigger 112b and the self-propelled operation trigger 112a of the mower 100 are all integrated into the operating member 112. In addition, the self-propelled operation trigger 112a is not limited to a physical switch or a signal switch, and any device that can control the current in a circuit to be on or off is applicable. In fact, the preceding self-propelled operation trigger 112a and/or the preceding mowing operation trigger 112b are not limited to current control and may also control the self-propelled function to be enabled or disabled by mechanical means.

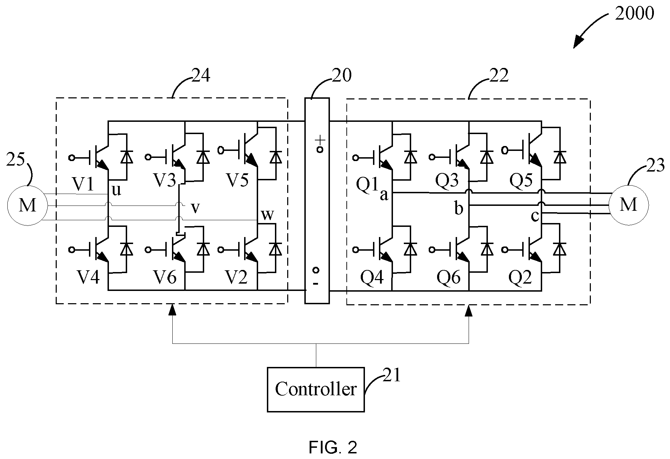

A main control board 200 may be disposed on the body 12 or the handle device 11, and a control circuit 2000 on the main control board 200 can control at least the traveling and/or mowing of the mower 100. As shown in FIG. 2, the control circuit 2000 may include at least a power interface 20, a controller 21, a first driver circuit 22, a traveling motor 23, a second driver circuit 24, and a cutting motor 25.

The power interface 20 may be connected to a direct current (DC) power supply or an alternating current (AC) power supply. The control circuit 2000 may include a circuit capable of performing power conversion on the connected power supply. For example, the control circuit 2000 may include a rectifier circuit, a filter circuit, or a voltage converter circuit capable of rectifying, filtering, or performing boost conversion, buck conversion, or other conversions on the power cord connected to the power interface 20. It is to be understood that the mower 100 may include two or more power interfaces of the same or different types. For example, the mower 100 may include two DC power interfaces connectable to at least two battery packs. In this example, the power interface 20 is used for connecting a battery pack for a power tool. That is to say, the battery pack can supply power to the mower 100 and can also supply power to multiple power tools of different types. For example, the rated voltage of the battery pack is greater than or equal to 40 V, greater than or equal to 36 V, or greater than or equal to 50 V. This example does not specifically limit the appearance and structure of the battery pack.

In some examples, the power tool to which the battery pack can supply power may be a handheld power tool, such as a drill, a hedge trimmer, or a sander. Alternatively, the power tool may be a table tool, such as a table saw or a miter saw. Alternatively, the power tool may be a riding power tool, such as a riding mower, a riding vehicle, or an all-terrain vehicle. Alternatively, the power tool may be a robotic tool, such as a robotic mower or a robotic snow thrower. In some examples, the power tool may be an electric drill, an electric lamp, an electric vehicle, or the like. In some examples, the power tool may be a garden tool, such as the hedge trimmer, a blower, or a chain saw. Alternatively, the power tool may be a decoration tool, such as a screwdriver, a nail gun, a circular saw, or the sander. In some examples, the power tool may be a plant care tool, such as a grass trimmer, the hedge trimmer, or the chain saw. Alternatively, the power tool may be a cleaning tool, such as the blower, a snow thrower, or a washer. Alternatively, the power tool may be a drilling tool, such as the drill, the screwdriver, a wrench, or an electric hammer. Alternatively, the power tool may be a sawing tool, such as a reciprocating saw, a jigsaw, or the circular saw. Alternatively, the power tool may be a table tool, such as the table saw, the miter saw, a metal cutter, or an electric router. Alternatively, the power tool may be a sanding tool, such as an angle grinder or the sander. Alternatively, the power tool may be another tool, such as a lamp or a fan.

The first driver circuit 22 is connected between the controller 21 and the traveling motor 23 and is used for driving the traveling motor 23 to operate. In an example, the first driver circuit 22 is electrically connected to stator windings of phases of the traveling motor 23 and is used for transmitting the power supply current to the stator windings to drive the traveling motor 23 to rotate. As an example, as shown in FIG. 2, the first driver circuit 22 includes multiple switching elements Q1, Q2, Q3, Q4, Q5, and Q6. Gate terminals of the switching elements are electrically connected to the controller 21 and are used for receiving control signals from the controller 21. Drains or sources of the switching elements are connected to the stator windings of the traveling motor 23. The switching elements Q1 to Q6 receive the control signals from the controller 21 to change respective conduction states, thereby changing the current loaded to the stator windings of the traveling motor 23 by the power supply. In an example, the switching elements Q1 to Q6 in the first driver circuit 22 may be a three-phase bridge driver circuit including six controllable semiconductor power devices (such as field-effect transistors (FETs), bipolar junction transistors (BJTs), and insulated-gate bipolar transistors (IGBTs)) or any other types of solid-state switches (such as the IGBTs and the BJTs).

The second driver circuit 24 is connected between the controller 21 and the cutting motor 25 and is used for driving the cutting motor 25 to operate. For the circuit structure and drive mode of the second driver circuit 24, reference may be made to the circuit structure and drive mode of the first driver circuit 22, and the details are not repeated here.

The controller 21 can detect at least an operating signal generated after the handle device 11 is operated by the user and then control, according to the detected operating signal, the traveling motor 23 and/or the cutting motor 25 to operate. For example, after the user operates the handle device 11 to start the machine, the traveling motor 23 and/or the cutting motor 25 are powered on, and the controller 21 detects a thrust signal from the handle device 11 and then controls the traveling motor 23 to perform moving forward, turning, deceleration, acceleration, or other operations; or the controller 21 detects a mowing signal and controls the cutting motor 25 to operate so that the cutting blade cuts vegetation.

In an example, the user may start the mower 100 by operating the handle device 11, which may include, for example, starting the traveling motor 23 so that the mower 100 starts to move, starting the cutting motor 25 so that the mower 100 starts to mow, or starting the two motors simultaneously so that the mower 100 moves while mowing. For example, when the user operates the handle device 11, a start signal may be generated and transmitted to the controller 21, and the controller 21 can control the motor to start after recognizing the start signal, where the start signal may include a self-propelled start signal and a mowing start signal, and the controller 21 can distinguish between different start signals and control respective motors to start.

In the existing art, to quickly start the mower, a larger starting acceleration is generally set so that the traveling motor 23 or the cutting motor 25 can reach the set target speed in a short time. However, if the starting acceleration of the motor is too large, the smoothness of the speed increase of the motor is reduced, and the operating feel of the user is reduced. If the starting acceleration of the motor is set to be smaller, the startup process is slow, and the requirement of the user for quick startup cannot be satisfied.

In the example of the present application, the starting acceleration of the mower 100 may be controlled, thereby satisfying the requirement of the user for quick startup while ensuring the smoothness of the starting speed.

In an example, in response to the start signal, the controller 21 can control the traveling motor 23 to accelerate to the target self-propelled speed with the variable self-propelled acceleration. In an example, the variable self-propelled acceleration may have at least one change process. For example, if the initial value of the self-propelled acceleration is a1, then during a process of starting the traveling motor 23, the self-propelled acceleration changes once and becomes a2, where a1 is greater than a2, or a1 is less than a2. In other examples, the self-propelled acceleration may have two or more change processes. In some examples, the condition for changing the self-propelled acceleration may be time, a speed threshold, or a combination of the two. For example, the controller 21 may control the self-propelled acceleration to change every preset time or control the self-propelled acceleration to change once when the speed of the traveling motor 23 reaches a preset value. In some examples, the user may operate the handle device 11 to change the self-propelled acceleration.

In an example, the variable mowing acceleration may have at least one change process. For example, if the initial value of the cutting acceleration is a3, then during a process of starting the cutting motor 25, the mowing acceleration changes once and becomes a4. In other examples, the mowing acceleration may have two or more change processes. In some examples, the condition for changing the mowing acceleration may be time, a speed threshold, or a combination of the two. For example, the controller 21 may control the mowing acceleration to change every preset time or control the mowing acceleration to change once when the speed of the cutting motor 25 reaches a preset value. In some examples, the user may operate the handle device 11 to change the mowing acceleration.

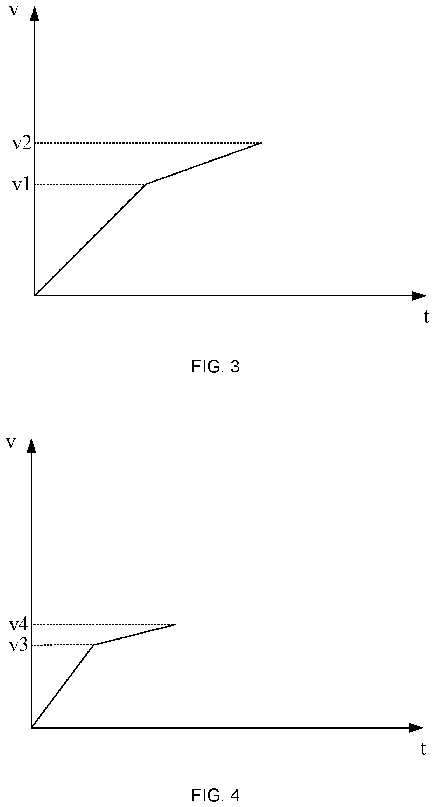

In this example, referring to the variation curve of the speed of the traveling motor 23 shown in FIG. 3, the controller 21 may control the traveling motor 23 to accelerate to the first speed v1 with the first acceleration and based on the first speed, accelerate to the target self-propelled speed v2 with the second acceleration. The first acceleration is greater than the second acceleration. In the early stage of startup, the traveling motor 23 is started with a larger starting acceleration, and when the starting speed reaches a certain value, the slope of the speed increase is reduced so that the traveling motor 23 at high speed can accelerate smoothly. Referring to the variation curve of the speed of the cutting motor 25 shown in FIG. 4, the controller 21 may control the cutting motor 25 to accelerate to the third speed v3 with the third acceleration and based on the third speed, accelerate to the target cutting speed v4 with the fourth acceleration. The third acceleration is greater than the fourth acceleration. In the early stage of startup, the cutting motor 25 is started with a larger starting acceleration, and when the starting speed reaches a certain value, the slope of the speed increase is reduced so that the cutting motor 25 at high speed can accelerate smoothly while the safe startup of the cutting motor 25 can be ensured.

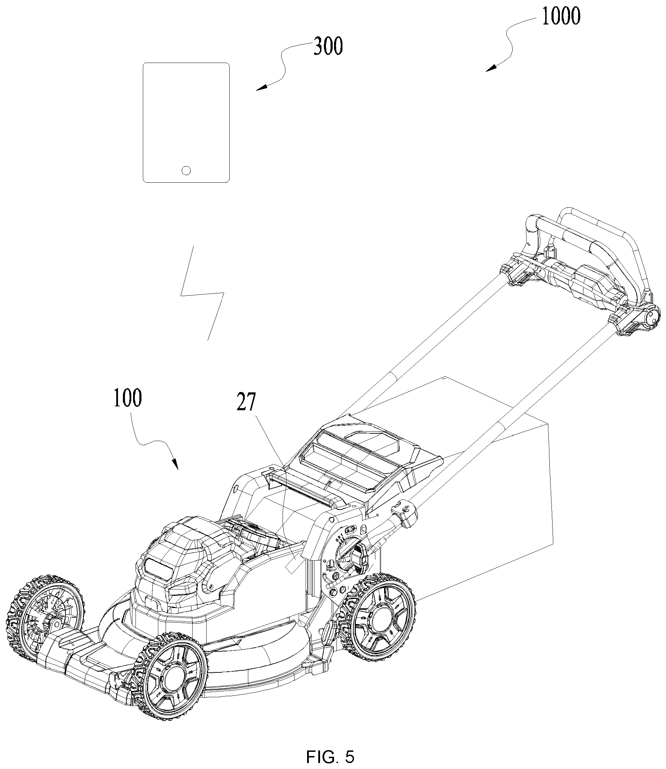

The mower 100 shown in FIG. 1 further includes an IoT module 27. The IoT module 27 may be disposed on the main control board 200, or may be disposed on the handle device 11, or may be detachably mounted on the mower 100, or can communicate with at least the main control board 200. Referring to a mower system 1000 shown in FIG. 5, the mower 100 can communicate with an external terminal 300 through the IoT module 27 and acquire the communication data sent by the external terminal 300.

In this example, the external terminal 300 may be a smartphone, a smartwatch, a tablet computer, a virtual reality (VR)/augmented reality (AR) device, a drone, or the like. The smartphone is used as an example for the description in the present application.

The IoT module 27 may support at least one of wired communication technology and wireless communication technology. In an example, the IoT module 27 supports at least one of transmission access, network switching, mobile communications, wireless communications, optical communications, satellite communications, support management, and private network communications. In an example, the IoT module 27 supports at least one of cellular network technology, wireless LAN technology, wireless PAN technology, satellite communication technology, infrared communication technology, optical fiber communication technology, Bluetooth LE technology, LoRa technology, Wi-Fi, and Zigbee. The cellular network technology may include mobile communication technologies such as 2G, 3G, 4G, and 5G and standards such as code-division multiple access (CDMA), the Global System for Mobile Communications (GSM), time division-synchronous code division multiple access (TD-SCDMA), wide code division multiple access (WCDMA), and long-term evolution (LTE). The wireless LAN technology may include Wi-Fi, Bluetooth, ZigBee, and other technologies and is used for wireless communication within the LAN. The wireless PAN technology may include near-field communication (NFC), radio-frequency identification (RFID), and other technologies and is used for short-range wireless communication. The satellite communication technology may include satellite phones, satellite televisions (TVs), satellite navigation, and other technologies and is used for long-range wireless communication. The infrared communication technology may include infrared remote control, infrared data transmission, and other technologies and is used for short-range wireless communication. The optical fiber communication technology may include optical fiber communication, optical fiber sensing, and other technologies and is used for high-speed long-range wireless communication. The LoRa technology is an ultra-long-range wireless transmission solution based on spread spectrum technology.

The user may send at least startup setting data to the IoT module 27 by operating the intelligent terminal 300. The controller 21 may communicate with the IoT module 27 to acquire the startup setting data and may adjust at least the self-propelled acceleration and/or the mowing acceleration according to the startup setting data. That is to say, the startup setting data includes at least setting data for the starting acceleration. In other examples, the startup setting data may include data set for the startup time, startup mode, startup power, or the like.

In this example, the user may send the startup setting data to the mower 100 before the mower 100 is started or may send the startup setting data to the mower 100 during a process of starting the mower 100. That is to say, the user may set the starting acceleration according to the usage requirements before the mower 100 travels and/or mows or change the starting acceleration during the process of starting the mower 100. For example, during the process of starting the mower 100, if the user perceives that the starting speed of the traveling motor 23 is relatively small, then the user may increase the self-propelled acceleration through the intelligent terminal; and if the user perceives that the starting speed of the traveling motor 23 is relatively large, then the user may reduce the self-propelled acceleration through the intelligent terminal.

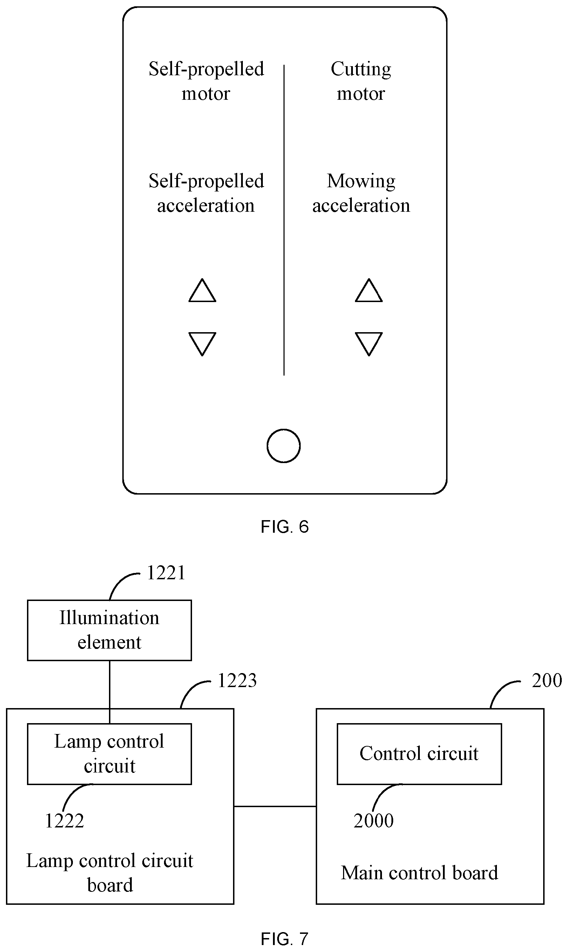

In an example, after the intelligent terminal 300 establishes a communication connection with the mower 100, the control interface for the mower 100 may be displayed in the terminal application, or at least the starting acceleration adjustment interface for different motors may be displayed. As shown in FIG. 6, triangular adjustment buttons for the self-propelled acceleration and the mowing acceleration are provided under the icons of the traveling motor 23 and the cutting motor 25, respectively, and the user may increase or decrease the self-propelled acceleration or the mowing acceleration by touching the adjustment buttons. In an example, the amplitude of the acceleration adjusted by the adjustment button is fixed. For example, the speed increases by 1 m/s each time. In other examples, a user input box may be directly set in a display interface, and the user may directly input any starting acceleration value that does not exceed the range satisfying the safety regulations of the mower 100. The intelligent terminal 300 may use any other display control interface that is easy to understand and operate, and the display control interface is not shown in detail here.

The controller 21 may adjust the first acceleration of the traveling motor 23 during starting according to the acquired startup setting data for the traveling motor 23 so that the traveling motor 23 can accelerate to the first speed faster; or the controller 21 may adjust the second acceleration of the traveling motor 23 so that the speed increase of the traveling motor 23 at a high-speed startup stage is smoother. Alternatively, the controller 21 may adjust the third acceleration of the cutting motor 25 during starting according to the acquired startup setting data for the cutting motor 25 so that the cutting motor 25 can accelerate to the third speed faster; or the controller 21 may adjust the fourth acceleration of the cutting motor 25 so that the speed increase of the cutting motor 25 at a high-speed startup stage is smoother.

In an example, the controller 21 may include at least a data storage unit and a control unit, where the data storage unit may acquire and store the startup setting data, and the control unit is configured to adjust at least the self-propelled acceleration and/or the mowing acceleration according to the startup setting data. In this example, the data storage unit may store all historical startup setting data or store at least the last used historical startup setting data, and the control unit may set the self-propelled acceleration and/or the mowing acceleration of the currently started mower 100 according to the historical startup setting data. In this manner, the user's usage habits can be well retained, or at least the user's habit of starting the mower 100 can be retained.

In other examples, the user may adjust different working parameters of the started mower 100 through the intelligent terminal 300. For example, the user may adjust the normal traveling speed of the mower 100, the normal mowing rotational speed, the traveling direction, or the like, not all of which are listed one by one here.

In some examples, the user may reset the function of part of the operating member 112 in the mower 100 through the intelligent terminal 300. For example, through the intelligent terminal 300, the user may redefine the self-propelled operation trigger 112a as the mowing operation trigger 112b and redefine the mowing operation trigger 112b as the self-propelled operation trigger 112a. That is to say, the user may interchange the positions of the self-propelled operation trigger 112a and the mowing operation trigger 112b according to personal usage habits. In some examples, a trigger switching mechanism (not shown) may be disposed in the mower 100, and the user may directly operate the trigger switching mechanism to interchange the positions of the self-propelled operation trigger 112a and the mowing operation trigger 112b.

With continued reference to FIG. 1, the mower 100 further includes an illumination assembly 122, and the illumination assembly 122 includes at least an illumination element 1221 and a light switch (not shown) disposed on the handle device 11. By operating the light switch, the user may control the illumination element 1221 to be turned on or off or control the illumination brightness of the illumination element 1221. Referring to FIG. 7, the illumination element 1221 may be driven by a lamp control circuit 1222, and the lamp control circuit 1222 is disposed on a lamp control circuit board 1223. The lamp control circuit board 1223 may be disposed below the illumination element 1221 or near the illumination element 1221. Bus communication or other communication methods such as carrier communication may be used between the lamp control circuit board 1223 and the main control board 200. The control circuit 2000 on the main control board 200 can communicate with at least the lamp control circuit 1222. In this example, the lamp control circuit 1222 is disposed separately on the lamp control circuit board 1223, thereby reducing the heat generated by the main control board 200.

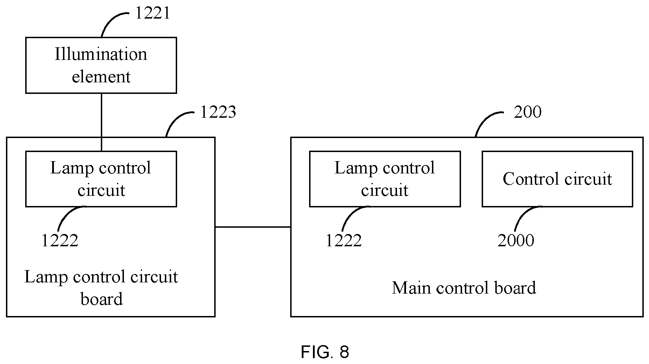

In an example, referring to FIG. 8, at least some of the components in the lamp control circuit 1222 are disposed on the main control board 200, other components are disposed on the lamp control circuit board 1223, and the lamp control circuit board 1223 may communicate with the main control board 200 through a bus. The number of components disposed on the lamp control circuit board 1223 is reduced so that the following is avoided: the lamp control circuit board 1223 disposed near the illumination element 1221 is affected by the heat generated due to the light emission of the illumination element 1221, and the service life of part of the components in the lamp control circuit 1222 is reduced.

The basic principles, main features, and advantages of the present application are shown and described above. It is to be understood by those skilled in the art that the preceding examples do not limit the present invention as defined by the appended claims.

## Claims

1. A push working machine (100), comprising:
a body (12) comprising at least a traveling assembly (121), a traveling motor (23) driving the traveling assembly, a functional assembly, and a functional motor (25) driving the functional assembly;
a handle device (11) connected to the body and comprising at least an operating member (112) for a user to operate;
a controller (21) configured to control at least working states of the traveling motor and the functional motor; and
a power interface (20) for connecting electrical energy capable of supplying power to at least the traveling motor and the functional motor;
**characterized in that** the controller (21) is configured to:
in response to a start signal, be capable of controlling the traveling motor (23) to accelerate to a first speed with a first acceleration and accelerate to a target self-propelled speed with a second acceleration.

2. The push working machine of claim 1, wherein the second acceleration is less than the first acceleration.

3. The push working machine of claim 1, further comprising an Internet of Things (IoT) module (27) configured to be connected to at least the controller (21) and capable of transmitting communication data to the controller.

4. The push working machine of claim 3, wherein the IoT module (27) is configured to communicate with an external terminal (300) and acquire startup setting data sent by the external terminal.

5. The push working machine of claim 4, wherein the controller (21) is configured to acquire the startup setting data and adjust at least the first acceleration and/or the second acceleration according to the startup setting data.

6. The push working machine of claim 3, wherein the IoT module (27) supports at least one of wired communication technology or wireless communication technology.

7. The push working machine of claim 3, wherein the IoT module (27) supports at least one of transmission access, network switching, mobile communications, wireless communications, optical communications, satellite communications, support management, or private network communications.

8. The push working machine of claim 3, wherein the IoT module (27) supports at least one of cellular network technology, wireless local area network (LAN) technology, wireless personal area network (PAN) technology, satellite communication technology, infrared communication technology, optical fiber communication technology, Bluetooth Low Energy (Bluetooth LE) technology, long range (LoRa) technology, Wi-Fi, or Zigbee.

9. The push working machine of claim 1, wherein the controller **(21)** comprises a data storage unit configured to store historical startup setting data.

10. The push working machine of claim 1, wherein the controller (21) further comprises a control unit configured to set the first acceleration and/or the second acceleration according to the historical startup setting data.

11. The push working machine of claim 1, wherein the controller (21) is further configured to:
in response to a functional start signal, be capable of controlling the functional motor (25) to accelerate to a target functional speed with variable acceleration.

12. The push working machine of claim 1, wherein the condition for switching from the first acceleration to the second acceleration is time, a speed threshold, or a combination of the two.

13. The push working machine of claim 1, wherein the controller (21) is configured to control a start acceleration of the traveling motor (23) to have two or more change processes.

14. The push working machine of claim 1, wherein the push working machine (100) is a push mower.

## Patentansprüche

1. Eine Schubarbeitsmaschine (100), umfassend:
einen Körper (12) mit mindestens einer Fahrwerksanordnung (121), einem Fahrmotor (23), der die Fahrwerksanordnung antreibt, einer Funktionseinheit und einem Funktionsmotor (25), der die Funktionseinheit antreibt;
eine Handgriffvorrichtung (11), die mit dem Körper verbunden ist und mindestens ein Betätigungselement (112) umfasst, das durch einen Benutzer bedienbar ist;
eine Steuereinheit (21), die dazu eingerichtet ist, mindestens die Betriebszustände des Fahrmotors und des Funktionsmotors zu steuern; und
eine Stromschnittstelle (20) zum Anschluss einer elektrischen Energieversorgung, die in der Lage ist, mindestens den Fahrmotor und den Funktionsmotor mit Energie zu versorgen;
**dadurch gekennzeichnet, dass** die Steuereinheit (21) dazu eingerichtet ist:
in Reaktion auf ein Startsignal in der Lage zu sein, den Fahrmotor (23) zu steuern, um ihn zunächst mit einer ersten Beschleunigung auf eine erste Geschwindigkeit und mit einer zweiten Beschleunigung auf eine Zielselbstfahrgeschwindigkeit zu beschleunigen.

2. Die Schubarbeitsmaschine nach Anspruch 1, wobei die zweite Beschleunigung geringer ist als die erste Beschleunigung.

3. Die Schubarbeitsmaschine nach Anspruch 1, weiterhin umfassend ein Internet-der-Dinge-(IoT)-Modul (27), das mit mindestens der Steuereinheit (21) verbindbar ist und in der Lage ist, Kommunikationsdaten an die Steuereinheit zu übermitteln.

4. Die Schubarbeitsmaschine nach Anspruch 3, wobei das IoT-Modul (27) dazu eingerichtet ist, mit einem externen Endgerät (300) zu kommunizieren und vom externen Endgerät gesendete Startvoreinstellungsdaten zu empfangen.

5. Die Schubarbeitsmaschine nach Anspruch 4, wobei die Steuereinheit (21) dazu eingerichtet ist, die Startvoreinstellungsdaten zu erfassen und mindestens die erste Beschleunigung und/oder die zweite Beschleunigung gemäß den Startvoreinstellungsdaten anzupassen.

6. Die Schubarbeitsmaschine nach Anspruch 3, wobei das IoT-Modul (27) mindestens eine der folgenden Kommunikationstechnologien unterstützt: Kabelkommunikation oder drahtlose Kommunikation.

7. Die Schubarbeitsmaschine nach Anspruch 3, wobei das IoT-Modul (27) mindestens eine der folgenden Funktionen unterstützt: Übertragungszugang, Netzwerkumschaltung, mobile Kommunikation, drahtlose Kommunikation, optische Kommunikation, Satellitenkommunikation, Verwaltungsunterstützung oder Kommunikation über private Netzwerke.

8. Die Schubarbeitsmaschine nach Anspruch 3, wobei das IoT-Modul (27) mindestens eine der folgenden Technologien unterstützt: Mobilfunknetztechnologie, drahtlose lokale Netzwerktechnologie (LAN), drahtlose persönliche Netzwerktechnologie (PAN), Satellitenkommunikationstechnologie, Infrarotkommunikationstechnologie, Glasfaserkommunikationstechnologie, Bluetooth-Low-Energy-(Bluetooth LE)-Technologie, Long-Range-(LoRa)-Technologie, Wi-Fi oder Zigbee.

9. Die Schubarbeitsmaschine nach Anspruch 1, wobei die Steuereinheit (21) eine Datenspeichereinheit umfasst, die dazu eingerichtet ist, historische Startvoreinstellungsdaten zu speichern.

10. Die Schubarbeitsmaschine nach Anspruch 1, wobei die Steuereinheit (21) weiterhin ein Steuerelement umfasst, das dazu eingerichtet ist, die erste Beschleunigung und/oder die zweite Beschleunigung gemäß den historischen Startvoreinstellungsdaten festzulegen.

11. Die Schubarbeitsmaschine nach Anspruch 1, wobei die Steuereinheit (21) weiterhin dazu eingerichtet ist:
als Reaktion auf ein Funktionsstartsignal in der Lage zu sein, den Funktionsmotor zu steuern, um ihn (25) mit variabler Beschleunigung auf eine Ziel-Funktionsgeschwindigkeit zu beschleunigen.

12. Die Schubarbeitsmaschine nach Anspruch 1, wobei das Kriterium für den Wechsel von der ersten Beschleunigung zur zweiten Beschleunigung Zeit, ein Geschwindigkeitsgrenzwert oder eine Kombination aus beidem ist.

13. Die Schubarbeitsmaschine nach Anspruch 1, wobei die Steuereinheit (21) dazu eingerichtet ist, eine Startbeschleunigung des Fahrmotors (23) mit zwei oder mehr Änderungsprozessen zu steuern.

14. Die Schubarbeitsmaschine nach Anspruch 1, wobei es sich bei der Schubarbeitsmaschine (100) um einen Schubrasenmäher handelt.

## Revendications

1. Une machine de travail poussée (100), comprenant :
un corps (12) comprenant au moins un ensemble de déplacement (121), un moteur de déplacement (23) entraînant l'ensemble de déplacement, un ensemble fonctionnel et un moteur fonctionnel (25) entraînant l'ensemble fonctionnel ;
un dispositif de poignée (11) connecté au corps et comprenant au moins un élément d'action (112) destiné à être actionné par un utilisateur ;
une unité de commande (21) configurée pour commander au moins les états de fonctionnement du moteur de déplacement et du moteur fonctionnel ; et
une interface d'alimentation électrique (20) destinée à connecter une énergie électrique apte à alimenter au moins le moteur de déplacement et le moteur fonctionnel ;
**caractérisée en ce que** l'unité de commande (21) est configurée pour :
en réponse à un signal de démarrage, être apte à commander le moteur de déplacement (23) pour qu'il accélère à une première vitesse avec une première accélération et accélère à une vitesse cible en autopropulsion avec une seconde accélération.

2. La machine de travail poussée selon la revendication 1, dans laquelle la seconde accélération est inférieure à la première accélération.

3. La machine de travail poussée selon la revendication 1, comprenant en outre un module Internet des objets (IoT) (27) connecté au moins à l'unité de commande (21) et apte à transmettre des données de communication à l'unité de commande.

4. La machine de travail poussée selon la revendication 3, dans laquelle le module IoT (27) est configuré pour communiquer avec un terminal externe (300) et acquérir des données de réglage de démarrage envoyées par le terminal externe.

5. La machine de travail poussée selon la revendication 4, dans laquelle l'unité de commande (21) est configurée pour acquérir les données de réglage de démarrage et ajuster au moins la première accélération et/ou la seconde accélération en fonction des données de réglage de démarrage.

6. La machine de travail poussée selon la revendication 3, dans laquelle le module IoT (27) prend en charge au moins l'une des technologies de communication filaire ou sans fil.

7. La machine de travail poussée selon la revendication 3, dans laquelle le module IoT (27) prend en charge au moins l'un des éléments suivants : accès de transmission, commutation de réseau, communications mobiles, communications sans fil, communications optiques, communications par satellite, gestion du support ou communications sur réseau privé.

8. La machine de travail poussée selon la revendication 3, dans laquelle le module IoT (27) prend en charge au moins l'une des technologies suivantes : technologie de réseau cellulaire, technologie de réseau local sans fil (LAN), technologie de réseau personnel sans fil (PAN), technologie de communication par satellite, technologie de communication infrarouge, technologie de communication par fibre optique, technologie Bluetooth Low Energy (Bluetooth LE), technologie longue portée (LoRa), Wi-Fi ou Zigbee.

9. La machine de travail poussée selon la revendication 1, dans laquelle l'unité de commande (21) comprend une unité de stockage de données configurée pour stocker des données historiques de réglage de démarrage.

10. La machine de travail poussée selon la revendication 1, dans laquelle l'unité de commande (21) comprend en outre un élément de commande configuré pour définir la première accélération et/ou la seconde accélération en fonction des données historiques de réglage de démarrage.

11. La machine de travail poussée selon la revendication 1, dans laquelle l'unité de commande (21) est en outre configurée pour, en réponse à un signal de démarrage fonctionnel, être apte à commander le moteur fonctionnel (25) pour qu'il accélère à une vitesse fonctionnelle cible avec une accélération variable.

12. La machine de travail poussée selon la revendication 1, dans laquelle la condition de commutation de la première accélération à la seconde accélération est temps, un seuil de vitesse ou une combinaison des deux.

13. La machine de travail poussée selon la revendication 1, dans laquelle l'unité de commande (21) est configurée pour commander une accélération de démarrage du moteur de déplacement (23) avec deux processus de variation ou plus.

14. La machine de travail poussée selon la revendication 1, dans laquelle la machine de travail poussée (100) est une tondeuse poussée.
